Europäisches Patentamt

European Patent Office

Office européen des brevets

(19)

(11) Veröffentlichungsnummer: **0 271 016 B1**

(12) **EUROPÄISCHE PATENTSCHRIFT**

(45) Veröffentlichungstag der Patentschrift: **29.05.91**

(51) Int. Cl.⁵: **B60R 27/00, A01M 29/00**

(21) Anmeldenummer: **87117949.5**

(22) Anmeldetag: **04.12.87**

(54) **Einrichtung zur Verhinderung von Marderschäden im Motorraum von Kraftfahrzeugen.**

(30) Priorität: **06.12.86 DE 3641683**

(43) Veröffentlichungstag der Anmeldung:
**15.06.88 Patentblatt 88/24**

(45) Bekanntmachung des Hinweises auf die
Patenterteilung:
**29.05.91 Patentblatt 91/22**

(84) Benannte Vertragsstaaten:
**AT CH FR LI NL**

(56) Entgegenhaltungen:
**DE-A- 3 423 038**
**US-A- 2 887 730**

(73) Patentinhaber: **Daimler-Benz Aktiengesellschaft**
**Postfach 600202 Mercedesstrasse 136**
**W-7000 Stuttgart 60(DE)**

(72) Erfinder: **Gutjahr, Manfred A., Dr.**
**Ahornweg 5**
**W-7446 Oberboihingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Gegenstand der Erfindung ist eine Einrichtung zur Verhinderung von Marderschäden im Motorraum von Kraftfahrzeugen.

Kleinsäugetiere wie insbesondere Steinmarder beschädigen in zunehmendem Maße Gummi- und Kunststoffteile im Motorraum von Kraftfahrzeugen. Insbesondere werden Zündkabel und Kühlwasserschläuche beschädigt, was zu einem Ausfall des Fahrzeuges führt. Zur Verhinderung dieser Schäden sind bereits die unterschiedlichsten Vorschläge gemacht worden, z.B. Vergrämung der Marder durch Licht- oder Schallquellen im Motorraum, durch Geruchsstoffe oder durch elektrische Spannungsimpulse. Die sicherste Lösung wäre, den Motorraum völlig gegen die Tiere abzudichten. Dies ist allerdings wegen der Relativbewegung zwischen Karosserie und Fahrwerk nur mit großem konstruktivem Aufwand möglich. So ist beispielsweise die schlitzförmige Öffnung zwischen Motorraum und Radhaus zur Durchführung der Spurstange für die Tiere schon ausreichend breit dimensioniert.

Die Efindung geht aus von der DE-A1-3423 038, welche eine Einrichtung zur Abwehr von Tieren, die Schäden im Motorraum verursachen, betrifft. Diese Einrichtung, verwendet zu diesem Zweck einen Ultraschall generator und eine Beleuchtungseinrichtung, was einen entsprechenden Aufwand verursacht,

Der Erfindung liegt dem gegenüber die Aufgabe zugrunde, eine einfache, billige und auf Dauer wirksame Einrichtung anzugeben, mit der die Marder vom Zugang zu dem Motorraum abgehalten werden können. Die Einrichtung soll unabhängig von dem Fahrzeugtyp preiswert angebracht und jederzeit nachgerüstet werden können.

Diese Aufgabe wird durch die in dem Patentanspruch 1 beschriebene Einrichtung gelöst. Bei der erfindungsgemäßen Einrichtung werden eine oder mehrere mit Stacheln bewehrte Matten so angeordnet, daß sie beim Versuch des Eindringens eines Marders in den Motorraum von diesem betreten werden müssen. Bei Berührung des Fußballens des Marders mit den Stacheln erfolgt eine schmerzhafte Abschreckung, die dazu führt, daß das Fahrzeug von dem Marder gemieden wird.

Da einerseits sicher gestellt werden muß, daß der Marder beim Betreten der Matte auf einen Stachel tritt, andererseits aber auch nicht zu viele Stacheln pro Flächeneinheit vorhanden sein dürfen, weil sich sonst das Gewicht des Marders auf zu viele Stacheln verteilt und der Druck des Ballens auf den einzelnen Stachel zu sehr abnimmt, empfiehlt es sich, die Stacheln so anzuordnen, daß der Abstand von Spitze zu Spitze 8 bis 12 mm beträgt. Ebenfalls als günstig herausgestellt hat es sich, wenn die Stacheln eine Länge von 4 bis 6 mm besitzen.

Die Stacheln können aus scharf angespitzten Drähten, Blechstücken, oder auch aus entsprechend geformten spitzen Kunststoffkegeln bestehen. Wesentlich ist lediglich, daß sie so spitz sind, bzw. daß die Trittfläche für den Marder so klein ist, daß auch bei dem geringen Gewicht des Marders beim Auftreten ein Schmerz entsteht, der den Marder vom weiteren Betreten der Matte abhält.

Die Stacheln sind auf einer Matte befestigt, die aus Fasermaterial oder auch aus einer Folie bestehen kann. Bei einer Matte aus Fasermaterial, insbesondere aus Kunststoffasern können die Stacheln in der Faserschicht verankert werden oder bei der Herstellung in das Mattenmaterial "eingewebt" werden. Solche Herstellungstechniken sind z.B. bei der Herstellung von Belägen für Drahtbürsten bekannt. Bei der Verwendung von Folien als Mattenmaterial wird man eher Kunststoffdornen bevorzugen, die mit dem Mattenmaterial verschweißt oder verklebt sind.

Die Matte wird bei abgestelltem Fahrzeug unter dem Motorraum plaziert oder an den Einstiegsstellen in den Motorraum befestigt, in jedem Fall aber so angebracht, daß der Marder den Motorraum nicht betreten kann, ohne mit den Stacheln der Matte in für ihn unangenehmer Weise in Berührung zu kommen. Während die unter das Fahrzeug gelegte Matte nach Gebrauch wieder entfernt werden muß, können die an der Karosserie in den Einstiegszonen befestigten Matten bzw. Mattenstücke dort auf Dauer verbleiben. Die Matte als solche muß dabei eine ausreichende Flexibilität besitzen, um den Karosserierundungen folgen zu können. Auch die unter dem Fahrzeug zu plazierende Matte soll flexibel sein, damit sie für den Transport z.B. im Kofferraum zusammengerollt oder zusammengelegt werden kann.

In der Abbildung werden verschiedene Ausführungsformen einer stachelbewehrten Matte schematisch dargestellt. Es zeigen

Fig. 1    eine Matte mit dreieckförmigen Metallplatten als Stacheln

Fig. 2    eine Kunststoffolie mit Kunststoffstacheln und

Fig. 3    eine Gewebematte mit drahtförmigen Stacheln

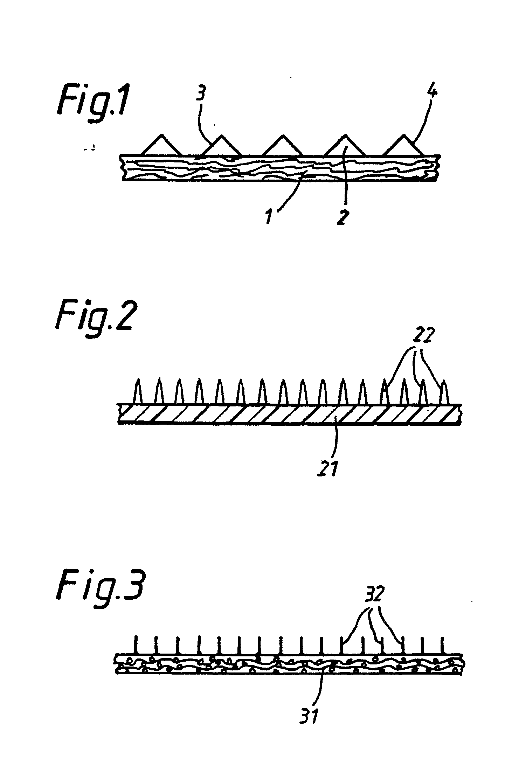

Fig. 1 zeigt eine Matte aus einem nicht gewebten Grundmaterial 1, z.B. aus Vliesstoff oder Filz, die mit Stacheln 2 in Form dreieckiger Plättchen besetzt ist. Die Plättchen 2 können aus Metall oder auch aus Kunststoff bestehen. Die Kanten 3 und 4 der Plättchen sind zu Schneiden geschärft, so daß beim Betreten schmerzhafte Eindrücke oder auch leichte Verletzungen der Sohlen der Tiere entstehen, die sie von weiterem Betreten abhalten. Die Plättchen können auch im Gegensatz zur Darstellung abwechselnd um 90° zueinander versetzt sein oder in Reihen angeordnet sein, wobei die Plättchen einer Reihe jeweils einen Winkel von 90° zu den Plättchen der anderen Reihe bilden.

Fig. 2 zeigt eine Matte bestehend aus einer Kunststoffolie 21, die mit kegelförmigen Kunststoffstacheln 22 besetzt ist.

Fig. 3 zeigt eine Matte, die aus einem textilen Grundgewebe 31 besteht, aus dem nadelförmige Drahtstacheln 32 herausragen. Diese Matten sind besonders einfach herzustellen.

## Ansprüche

1. Einrichtung zur Verhinderung von Marderschäden im Motorraum von Kraftfahrzeugen, **gekennzeichnet durch** eine oder mehrere mit Stacheln bewehrte Matten, die so angeordnet sind, daß sie beim Versuch des Eindringens eines Marders in den Motorraum betreten werden müssen.

2. Einrichtung nach Anspruch 1, **dadurch gekennzeichnet,** daß der Abstand der Stacheln von Spitze zu Spitze 8 bis 12 mm beträgt.

3. Einrichtung nach Anspruch 1 oder 2, **dadurch gekennzeichnet,** daß die Stacheln eine Länge von 4 bis 6 mm besitzen.

## Claims

1. Device for preventing damage by martens in the engine compartment of motor vehicles, characterized by one or more mats fitted with spikes which, when a marten tries to make an entry into the engine compartment, have to be trodden on.

2. Device according to claim 1, characterized in that the distance between the spikes from point to point is 8 to 12 mm.

3. Device according to claim 1 or 2, characterized in that the spikes are 4 to 6 mm long.

## Revendications

1. Dispositif pour éviter les dommages dus aux martres dans les compartiments moteur de véhicules automobiles, caractérisé par une ou plusieurs nattes armées de picots, qui sont disposées de telle sorte qu'elles doivent être parcourues lors d'une tentative de pénétration d'une martre dans le compartiment moteur.

2. Dispositif selon la revendication 1, caractérisé en ce que l'espacement des picots de pointe à pointe est compris entre 8 et 12 mm.

3. Dispositif selon une des revendications 1 ou 2, caractérisé en ce que les picots ont une longueur de 4 à 6 mm.

*Fig.1*

3

4

1

2

*Fig.2*

22

21

*Fig.3*

32

31